# DEMANDE DE BREVET EUROPEEN

(11) **EP 0 994 432 A1**
(43) Date de publication de la demande: **19.04.2000**
(21) Numéro de dépôt: 99402481.8
(22) Date de dépôt: 08.10.1999
(51) Int. Cl.: G06F 17/60

(54) **Installation de distribution d'un stock de bouteilles de gaz**

(30) Priorité: 14.10.1998 FR 9812873
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Jouvaud, Dominique, 75015 Paris (FR)
(74) Mandataire: Le Moenner, Gabriel

(57) **Abrégé**

Cette installation de distribution d'un stock de bouteilles de gaz (16,18) comprend un espace de stockage (12) des bouteilles équipé de moyens d'évaluation de stock (32,34) de bouteilles en vue du réapprovisionnement de l'installation. Les moyens d'évaluation de stock comportent des moyens de prise de vues (32) de l'espace de stockage raccordés à des moyens de synchronisation pour la prise de vues périodique de l'espace de stockage et une unité centrale de traitement (34) assurant une comparaison entre les images successivement délivrées par les moyens de prise de vues (32).

## Description

La présente invention est relative à une installation de distribution d'un stock de bouteilles de gaz.

L'utilisation de gaz industriel conditionné en bouteilles est très répandue dans l'industrie. Généralement, une entreprise consommatrice dispose d'un dépôt central auquel le fournisseur livre les bouteilles de gaz commandées. A partir de ce dépôt central, les bouteilles sont distribuées dans les différents services de l'entreprise pour être acheminées par le personnel vers leur point d'utilisation. On parle alors de bouteilles "volantes" pour les différencier des bouteilles "en rampe" qui sont livrées et raccordées par le fournisseur à leur point d'utilisation.

En ce qui concerne les bouteilles volantes, leur utilisation dans une entreprise pose un certain nombre de problèmes, notamment en raison du fait que le nombre de bouteilles pleines disponibles n'est pas surveillé. Un utilisateur peut alors enlever les dernières bouteilles de gaz pleines d'un certain type sans en commander, par négligence ou par oubli, de nouvelles.

Il arrive par ailleurs que plusieurs utilisateurs passent indépendamment les uns des autres des commandes de bouteilles du même type, ce qui peut conduire à un sur-stock qui encombre le dépôt.

Pour pallier ces inconvénients, certaines installations sont pourvues d'un ensemble de capteurs disposés au voisinage de chaque support de bouteilles et capables de détecter la présence ou l'absence des bouteilles. Cette technique permet d'obtenir, en temps réel, une valeur exacte du stock de bouteilles. Elle présente toutefois un certain nombre d'inconvénients. notamment en raison du fait qu'elle nécessite de prévoir un capteur par bouteille et, par conséquent, de doter l'installation d'un réseau de câblage dont la complexité augmente avec la capacité de stockage et d'une unité de traitement des signaux délivrés par les capteurs relativement complexe, ce qui rend l'installation relativement onéreuse.

Le but de l'invention est de pallier cet inconvénient.

Elle a donc pour objet une installation de distribution d'un stock de bouteilles de gaz comprenant un espace de stockage de bouteilles de gaz équipé de moyens d'évaluation de stock de bouteilles en vue du réapprovisionnement de l'installation, caractérisée en ce que les moyens d'évaluation de stock comportent des moyens de prise de vues de l'espace de stockage raccordés à des moyens de synchronisation pour la prise de vues périodique de l'espace de stockage et une unité centrale de traitement assurant une comparaison entre les images successivement délivrées par les moyens de prise de vues.

On dispose ainsi d'une valeur précise du stock de bouteilles, et ce, quelle que soit la capacité de l'espace de stockage.

L'installation de distribution peut en outre comporter une ou plusieurs des caractéristiques suivantes, prises isolément ou selon toutes le combinaisons techniquement possibles :
- l'unité centrale de traitement comporte en outre des moyens de comparaison entre le stock de bouteilles évalué par les moyens d'évaluation de stock et une valeur de seuil prédéterminée en dessous de laquelle l'espace de stockage doit être réapprovisionné ;
- elle comporte en outre un lecteur de badges d'identification disposé au voisinage d'une porte d'accès à l'espace de stockage et relié aux moyens de prise de vues en vue de la formation d'au moins une image de l'espace de stockage en cas de pénétration de celui-ci par une personne non autorisée ;
- elle comporte une mire tournée vers les moyens de prise de vues et en regard de laquelle sont disposées les bouteilles de gaz ;
- elle comporte des moyens d'éclairage du stock de bouteilles ;
- les moyens d'évaluation de stock de bouteilles comportent des moyens de traitement d'images comprenant des moyens d'analyse spectrale raccordés aux moyens de prise de vues et connectés à des moyens de reconnaissance de formes pour l'identification des bouteilles de gaz ;
- les moyens d'évaluation de stock comportent, associés aux moyens de traitement d'images, des moyens de mémorisation d'un ensemble de mots de données correspondant chacun à une bouteille de gaz et contenant au moins un bit dont la valeur indique la présence ou l'absence de la bouteille ;
- elle comporte des moyens d'alarme raccordés aux moyens d'évaluation de stock en vue de l'émission d'un signal d'alarme en cas de détection d'une personne ou d'un objet devant les moyens de prise de vues pendant une période de temps supérieure à une valeur de seuil prédéterminée.

D'autres caractéristiques et avantages ressortiront de la description suivante, donnée uniquement à titre d'exemple, et faite en référence aux dessins annexés sur lesquels :
- la figure 1 est une vue schématique d'une installation de distribution d'un stock de bouteilles de gaz conforme à l'invention ;
- la figure 2 est un schéma synoptique de l'installation de la figure 1 ;
- la figure 3 est un schéma synoptique des moyens de traitement d'images de l'installation de la figure 1 ; et
- la ligure 4 est une vue de face d'une des parois de l'espace de stockage.

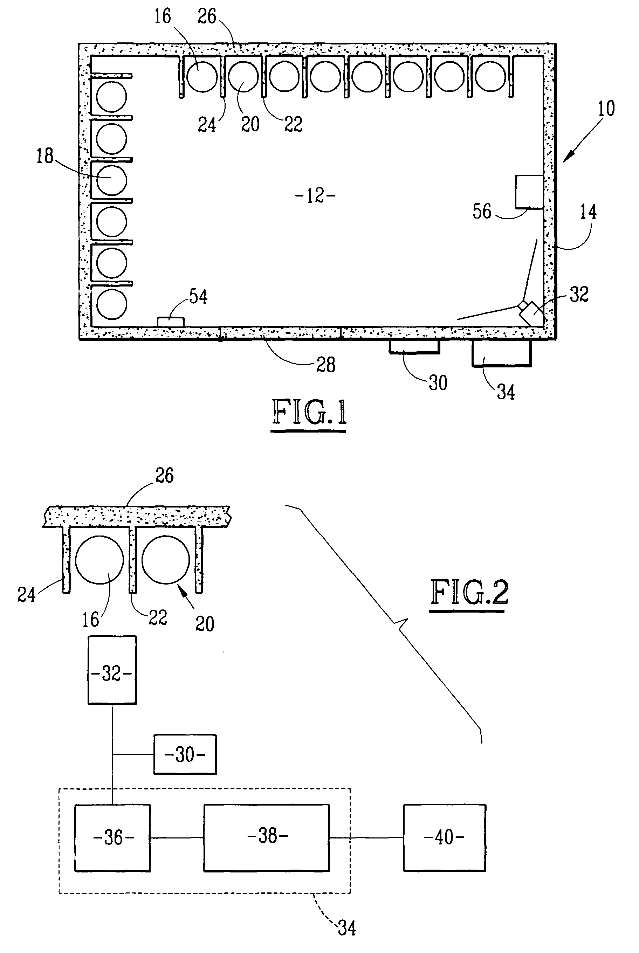

Sur la figure 1, on a représenté une installation 10 de distribution d'un stock de bouteilles de gaz. Cette installation comporte un espace de stockage 12 de bouteilles, situé à l'intérieur d'un local normalement clos 14. A l'intérieur de l'espace de stockage 12 sont disposées différentes bouteilles, telles que 16 et 18. Chaque bouteille est reçue dans un emplacement 20 prévu à cet effet, délimité par des barres horizontales, ou des cloisons verticales, telles que 22 et 24, fixées contre des murs. tels que 26, du local 14.

Comme cela est classique, les bouteilles de gaz 16 et 18 sont de préférence disposées par paires, à savoir une bouteille vide et une bouteille emplie de gaz, et regroupées par types de gaz, par exemple de l'acétylène ou de l'oxygène, à distance l'une de l'autre.

Les bouteilles pleines sont destinées à être distribuées à des utilisateurs, de préférence après que ces derniers aient ramené des bouteilles vides correspondantes, et les bouteilles vides doivent être reprises et/ou échangées par le fournisseur de bouteilles contre des bouteilles pleines.

Comme on le voit sur la figure 1, l'espace de stockage 12 est accessible par une porte 28, de préférence du type à fermeture automatique, dont le dispositif de verrouillage est raccordé à un lecteur 30 de badge de manière à ne permettre l'accès à l'espace de stockage 12 qu'à des personnes autorisées ou dûment enregistrées.

L'installation comporte des moyens d'évaluation du stock de bouteilles de manière à permettre un réapprovisionnement automatique de l'installation dès que le stock de bouteilles pleines atteint un seuil critique prédéterminé.

Dans le mode de réalisation de la figure 1, les moyens d'évaluation de stock comportent des moyens de prise de vues 32 d'au moins une partie sensible de l'espace de stockage 12, constitués par une ou plusieurs caméras vidéo de prise de vues, dont le nombre est choisi en fonction de l'angle de prise de vues et du nombre de râteliers de bouteilles à contrôler.

Les moyens d'évaluation de stock comportent en outre une unité centrale de traitement 34 disposée dans une armoire de commande et auxquels sont raccordés les moyens de prise de vues 32. L'unité centrale de traitement 34 comporte un étage 36 de traitement des images délivrées par les moyens de prise de vues 32 et un étage 38 de gestion de stock.

L'installation est complétée par une unité 40 de télésurveillance placée à distance de l'installation et au niveau de laquelle sont reçus des signaux de commande de réapprovisionnement délivrés par l'étage 38 de gestion de stock.

On voit par ailleurs sur cette figure 2 que les moyens de prise de vues 32 sont en outre couplés au lecteur 30 de badge d'identification et éventuellement au dispositif de verrouillage de la porte 28. de manière à former des images de l'espace de stockage 12 lorsqu'une personne non autorisée a tenté de pénétrer ou a effectivement pénétré à l'intérieur de l'espace de stockage 12.

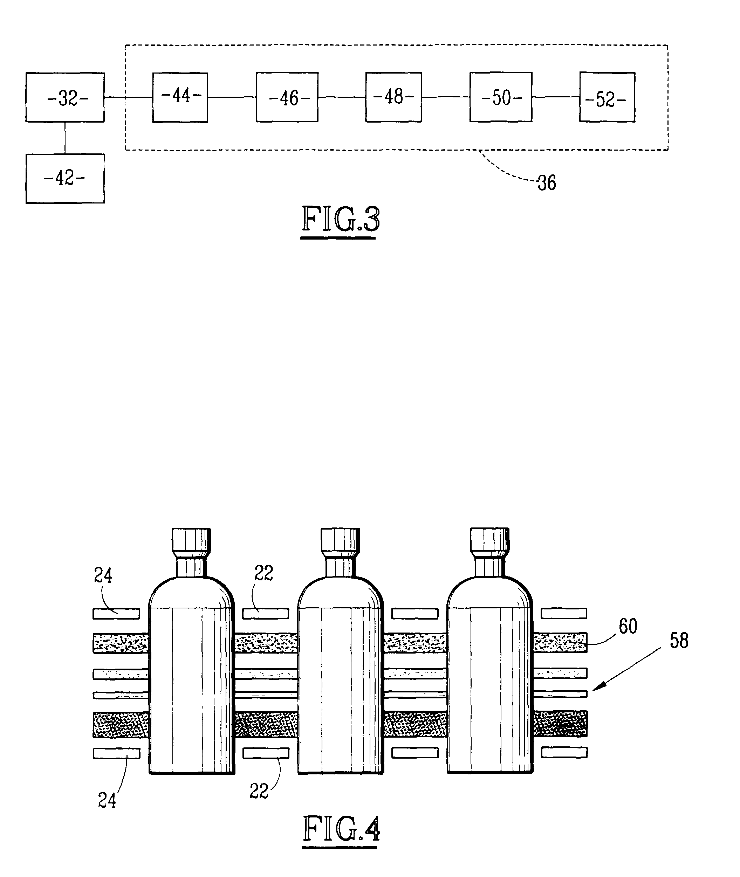

La description précise de l'étage 36 de traitement d'images va maintenant être faite en référence à la figure 3.

Comme on le voit sur cette figure 3, chaque caméra 32 est raccordée à un dispositif de synchronisation 42, constitué par exemple par une horloge de type classique, pilotant la caméra 32 de manière à procéder à la formation d'une image à des intervalles de temps prédéterminés, par exemple toutes les 15 ms.

Les images vidéo ainsi formées sont délivrées en entrée de l'unité de traitement 36 qui comporte, en entrée, une interface d'entrée/sortie 44 elle-même reliée à un convertisseur analogique-numérique 46.

Le convertisseur 46 est raccordé à un étage d'analyse spectrale 48 assurant le calcul, par des techniques classiques, par exemple à l'aide d'un calcul d'auto-corrélations. de l'analyse spectrale des images délivrées par la caméra 32.

L'étage d'analyse spectrale 48 est raccordé à un étage 50 de reconnaissance de formes de type classique, capable de détecter la présence de bouteilles dans les images délivrées par les moyens de prise de vues 32, par exemple par comparaison avec des modèles obtenus par apprentissage préalable.

En outre, l'étage 50 de reconnaissance de forme incorpore un algorithme de codage assurant la formation d'un ensemble de mots correspondant chacun à un emplacement 20 de stockage de bouteille, et codés par exemple sur 8 bits.

Par exemple, les mots ainsi formés comportent un ensemble de bits assurant le codage de l'adresse de l'emplacement de stockage 20. et un ou plusieurs bits dont !a valeur indique la présence ou l'absence d'une bouteille dans l'emplacement 20.

Comme on le voit sur la figure 3. l'étage 50 de reconnaissance de forme est raccordé à une mémoire 52, par exemple de type mémoire vive, dans laquelle sont stockés les mots ainsi délivrés, à des adresses successives et correspondant chacune à un emplacement de stockage 20.

Le fichier ainsi créé est périodiquement envoyé en direction de l'étage de gestion de stock 38 au niveau duquel les fichier successivement délivrés sont comparés entre eux de manière à obtenir une indication précise de l'évolution dans le temps du stock de bouteilles.

Par ailleurs, le nombre de bouteilles stockées dans l'espace de stockage 12 est comparé, dans l'étage de gestion 38, avec une valeur de seuil prédéterminée en dessous de laquelle un signal de commande de réapprovisionnement est envoyé en direction du système de télésurveillance 40 de manière à provoquer le réapprovisionnement de l'espace de stockage 12.

Comme mentionné précédemment, les moyens de prise de vues 32 sont opérationnellement couplés au lecteur de badge 30 et, le cas échéant, au dispositif de verrouillage de la porte 28 de manière à former, en vue de son enregistrement, au moins une image d'une personne non préalablement autorisée qui viendrait à se trouver à l'intérieur de l'espace de stockage 12.

Avantageusement, et en se référant à nouveau à la figure 1, l'installation est en outre dotée d'un boîtier d'alarme 54 raccordé aux moyens de prise de vues 32 et au dispositif de synchronisation 42 de manière à provoquer l'émission d'un signal d'alarme, par exemple un signal sonore, en cas de détection de la présence d'une personne ou d'un objet se situant devant les moyens de prise de vues 32 et masquant les bouteilles 16 et 18 pendant une période de temps supérieure à une valeur de seuil prédéterminée.

On voit enfin sur la figure 1 que l'installation peut être complétée par des moyens d'éclairage 56 capables de fournir une lumière suffisante pour le fonctionnement de l'installation, même en cas de faible intensité.

En se référant enfin à la figure 4, on voit que, de préférence, la paroi 26 du local 14 est de préférence pourvue d'une mire 58 tournée vers les moyens de prise de vues 32 et en regard de laquelle sont placées les bouteilles. La mire 58 est constituée par l'assemblage de lignes horizontales, telles que 60, d'épaisseurs et de niveaux de gris différents, de manière à être capable d'augmenter la sensibilité de l'installation même en cas de faible luminosité ou en cas de faible contraste ou encore lorsque des ombres sont projetées sur les bouteilles.

## Revendications

1. Installation de distribution d'un stock de bouteilles de gaz (16,18) comprenant un espace de stockage (12) des bouteilles de gaz équipé de moyens d'évaluation de stock (32,34,36,38,42) de bouteilles en vue du réapprovisionnement de l'installation, caractérisée en ce que les moyens d'évaluation de stock comportent des moyens de prise de vues (32) de l'espace de stockage (12) raccordés à des moyens de synchronisation (42) pour la prise de vues périodique de l'espace de stockage et une unité centrale de traitement (34) assurant une comparaison entre les images successivement délivrées par les moyens de prise de vues (32).

2. Installation selon la revendication 1, caractérisée en ce que l'unité centrale de traitement comporte en outre des moyens de comparaison (38) entre le stock de bouteilles évalué par les moyens d'évaluation de stock et une valeur de seuil prédéterminée en dessous de laquelle l'espace de stockage (12) doit être réapprovisionné.

3. Installation selon l'une des revendications 1 et 2, caractérisée en ce qu'elle comporte en outre un lecteur (30) de badges d'identification, disposé au voisinage d'une porte (28) d'accès à l'espace de stockage et relié aux moyens de prise de vues (32), en vue de la formation d'au moins une image de l'espace de stockage (12) en cas de pénétration de celui-ci par une personne non autorisée.

4. Installation selon l'une quelconque des revendications 1 à 3, caractérisée en ce qu'elle comporte une mire (58) tournée vers les moyens de prise de vues et en regard de laquelle sont disposées les bouteilles de gaz (16,18).

5. Installation selon l'une quelconque des revendications 1 à 4, caractérisée en ce qu'elle comporte des moyens d'éclairage (56) du stock de bouteilles.

6. Installation selon l'une quelconque des revendications 1 à 5, caractérisée en ce que les moyens d'évaluation de stock de bouteilles comportent des moyens de traitement d'images (36) comprenant des moyens d'analyse spectrale (48) raccordés aux moyens de prise de vues (32) et connectés à des moyens de reconnaissance de formes (50) pour l'identification des bouteilles de gaz.

7. Installation selon la revendication 6, caractérisée en ce que les moyens d'évaluation de stock comportent, associés aux moyens de traitement d'images (36), des moyens (52) de mémorisation d'un ensemble de mots de données correspondant chacun à une bouteille de gaz et contenant au moins un bit dont la valeur indique la présence ou l'absence de la bouteille.

8. Installation selon l'une quelconque des revendications 1 à 7, caractérisée en ce qu'elle comporte des moyens d'alarme raccordés aux moyens d'évaluation de stock (32,34,36,38,42) en vue de l'émission d'un signal d'alarme en cas de détection d'une personne ou d'un objet devant les moyens de prise de vues (32) pendant une période de temps supérieure à une valeur de seuil prédéterminée.
